# EUROPEAN PATENT APPLICATION

(11) **EP 4 786 425 A1**
(43) Date of publication of application: **05.08.2026**
(21) Application number: 24872574.9
(22) Date of filing: 27.09.2024
(51) Int. Cl.: C03B 37/012, C03B 37/027, G02B 6/02, G02B 6/032

(54) **METHOD FOR PRODUCING ANTI-RESONANT FIBER PREFORM AND METHOD FOR PRODUCING ANTI-RESONANT FIBER**

(30) Priority: 29.09.2023 JP 2023169260
(71) Applicant: Lightera Japan Co., Ltd., Tokyo 100-8322 (JP)
(72) Inventor: MUKASA, Kazunori, Tokyo 100-8322 (JP)
(74) Representative: SSM Sandmair
(86) International application number: PCT/JP2024/034820
(87) International publication number: WO 2025/070794

(57) **Abstract**

A method of manufacturing an anti-resonant fiber preform that includes an outer tube and a plurality of first capillaries that are joined to an inner wall of the outer tube and that are arranged mutually in a first positional relationship, a hollow core being formed in an area surrounded by the first capillaries, the method including: a first step of positioning the first capillaries respectively in a plurality of first positioning holes that are provided in a first positioning member; and a second step of inserting the first capillaries into the outer pipe, wherein the first positioning holes provided in the first positioning member are arranged such that the first positioning holes correspond to the first positional relationship of the first capillaries in the outer tube.

## Description

### Field

The present invention relates to a method of manufacturing an anti-resonant fiber preform and a method of manufacturing an anti-resonant fiber.

### Background

An anti-resonant fiber is an optical fiber that confines light in a hollow core by utilizing an anti-resonant phenomenon and transmits the light, and anti-resonant fibers have been actively examined. For example, Patent Literature 1 discloses a method of fixing capillaries to an inner wall of an outer tube by locally applying laser light as a method of manufacturing an anti-resonant fiber preform for manufacturing an anti-resonant fiber.

### Citation List

### Patent Literature

Patent Literature 1: US Patent Application Publication No. 2020/0156987

### Summary

### Technical Problem

The method according to Patent Literature 1 however has a problem in that the steps are extremely cumbersome because the capillaries are fixed one by one by laser light.

The present invention was made in view of the above-described circumstances and an object of the present invention is to provide a method of manufacturing an anti-resonant fiber preform and a method of manufacturing an anti-resonant fiber that can be enabled by simple steps. Solution to Problem

To solve the above problems and achieve an object, an embodiment of the present invention is a method of manufacturing an anti-resonant fiber preform that includes an outer tube and a plurality of first capillaries that are joined to an inner wall of the outer tube and that are arranged mutually in a first positional relationship, a hollow core being formed in an area surrounded by the first capillaries, the method including: a first step of positioning the first capillaries respectively in a plurality of first positioning holes which are provided in a first positioning member; and a second step of inserting the first capillaries into the outer pipe, wherein the first positioning holes which are provided in the first positioning member are arranged such that the first positioning holes correspond to the first positional relationship of the first capillaries in the outer tube.

In the first step, the first capillaries may be inserted into the first positioning holes, respectively.

The outer tube, the first capillaries, and the first positioning member may be made of glass.

A number of the first positioning holes in the first positioning member and a number of the first capillaries may be equal.

The method of manufacturing an anti-resonant fiber preform may include a third step of fixing the first positioning member to the outer tube.

Two the first positioning members may be arranged such that the outer tube is interposed between the first positioning members in a longitudinal direction.

The method of manufacturing an anti-resonant fiber preform may include a fourth step of fixing the first positioning member to the first capillaries after the first step.

The fourth step may include fixing the first positioning member and the first capillaries by reducing diameters of the first positioning holes.

The first positioning member may include a first through-hole that, with the first positioning member being attached to the outer tube, communicates with the area surrounded by the first capillaries.

The anti-resonant fiber preform may include a plurality of second capillaries that have an outer diameter smaller than an inner diameter of the first capillary and that are arranged inside the first capillaries, respectively, and the method may include a fifth step of respectively positioning the second capillaries in a plurality of second positioning holes that are provided in the second positioning member; and a sixth step of inserting the second capillaries into the first capillaries, respectively, and the second positioning holes that are provided in the second positioning member are arranged such that the second positioning holes correspond to a second positional relationship of the second capillaries in the outer tube.

The second positioning member may have a second through-hole that communicates with inside of the first capillary with the second positioning member being attached to the first positioning member.

The second positioning member may be arranged such that the first positioning member is interposed between the outer pipe and the second positioning member.

The method of manufacturing an anti-resonant fiber preform may include a seventh step of fixing the first positioning member, the second positioning member, and the outer tube.

The method of manufacturing an anti-resonant fiber preform may include an eighth step of fixing the second positioning member to the second capillaries.

The eighth step may include fixing the second positioning member and the second capillaries by reducing diameters of the second positioning holes.

The first positioning member may have a first through-hole that communicates with an area surrounded by the first capillaries with the first positioning member being attached to the outer tube, and the second positioning member may have a third through-hole that communicates with the area surrounded by the first capillaries via the first through-hole with the second positioning member being attached to the first positioning member.

The method of manufacturing an anti-resonant fiber preform may include a ninth step of providing a tapered part whose outer diameter decreases with increasing distance from the outer tube on a side of a first end of the outer tube, and attaching a pressurizing member for pressurizing at least the inside of the first capillary on a side of a second end that is opposite to the first end of the outer tube.

An embodiment of the present invention is a method of manufacturing an anti-resonant fiber including: an anti-resonant fiber preform manufacturing step of performing the method of manufacturing an anti-resonant fiber preform; and a drawing step of drawing an anti-resonant fiber from the manufactured anti-resonant fiber preform.

### Advantageous Effects of Invention

According to the present invention, it is possible to enable a method of manufacturing an anti-resonant fiber preform and a method of manufacturing an anti-resonant fiber by simple steps.

### Brief Description of Drawings

FIG. 1 is a schematic cross-sectional view of an anti-resonant fiber preform that is manufactured by a manufacturing method according to a first embodiment.
FIG. 2 is a flowchart of the manufacturing method according to the first embodiment.
FIG. 3 is an illustration of the manufacturing method according to the first embodiment.
FIG. 4 is an illustration of the manufacturing method according to the first embodiment.
FIG. 5 is an illustration of the manufacturing method according to the first embodiment.
FIG. 6 is a flowchart of a manufacturing method according to a second embodiment.
FIG. 7 is an illustration of a manufacturing method according to a third embodiment.
FIG. 8 is an illustration of a manufacturing method according to a fourth embodiment.
FIG. 9 is an illustration of the manufacturing method according to the fourth embodiment.
FIG. 10 is a schematic cross-sectional view of an anti-resonant fiber preform that is manufactured by a manufacturing method according to a fifth embodiment.
FIG. 11 is an illustration of the manufacturing method according to the fifth embodiment.
FIG. 12 is an illustration of the manufacturing method according to the fifth embodiment.
FIG. 13 is an illustration of the manufacturing method according to the fifth embodiment.
FIG. 14 is an illustration of the manufacturing method according to the fifth embodiment.
FIG. 15 is an illustration of a manufacturing method according to a sixth embodiment.
FIG. 16 is an illustration of the manufacturing method according to the sixth embodiment.
FIG. 17 is a flowchart of a method of manufacturing an anti-resonant fiber according to a seventh embodiment.

### Description of Embodiments

With reference to the drawings, embodiments of the present invention will be described in detail below. Note that the embodiments described below do not limit the present invention. In each of the drawings, the same or corresponding components are assigned with the same reference numerals and redundant description thereof are omitted as appropriate.

### (First Embodiment)

### [Configuration of Anti-resonant Fiber]

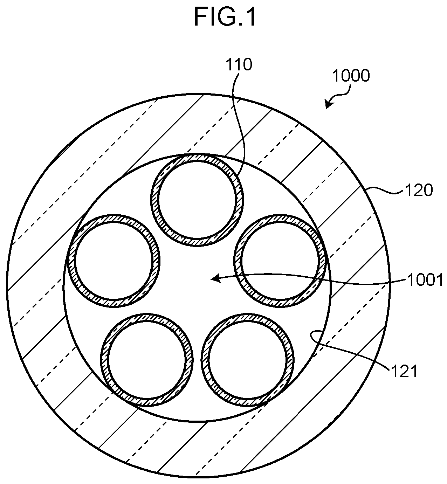

FIG. 1 is a schematic cross-sectional view of a cross-section of an anti-resonant fiber preform that is manufactured by a manufacturing method according to a first embodiment, which is a cross-section orthogonal to a longitudinal direction. An anti-resonant fiber preform 1000 is made of silica-based glass and includes five first capillaries 110 and one outer tube 120. The five first capillaries 110 are an example of a plurality of first capillaries.

The five first capillaries are in a circular tube form and are arranged such that a pentagonal lattice is formed on the cross-section. The pentagonal lattice is, for example, a regular pentagonal lattice. The first capillary 110 is, for example, a silica-based glass tube having a given thickness. A state that the first capillaries 110 are arranged such that the first capillaries 110 form the pentagonal lattice is an example of a state that the first capillaries 110 are arranged mutually in a first positional relationship.

The outer tube 120 is in a circular tube form. The outer tube 120 is, for example, a silica-based glass tube having a given thickness. The outer tube 120 houses the first capillaries 110. Specifically, the first capillaries 110 are joined to an inner wall 121 of the outer tube 120 by welding, or the like.

A hollow core 1001 is formed in an area that is surrounded by the five first capillaries 110. The five first capillaries 110 have a function of confining light in the hollow core 1001 by an anti-resonant phenomenon. Thus, in the hollow core 1001, light is confined because of an anti-resonant light confinement function and is propagated. For example, 80% of an optical field of light that is propagated through constituent elements presents in the hollow core 1001 and the remaining 20% is in the first capillaries 110, and the like.

It is possible to change a wavelength of light that the hollow core 1001 propagates by adjusting a thickness of the first capillaries 110. In other words, the thickness of the first capillaries 110 is set according to a wavelength of light that is propagated by the hollow core 1001. The wavelength of light that the hollow core 1001 propagates is, for example, a wavelength contained in a communication wavelength band such as a 1.55 µm band and is not particularly limited. For example, the light that the hollow core 1001 propagates and the wavelength of the light may be light that is used for power transmission as in optical feeding and a wavelength of the light.

Note that the first capillaries 110 are arranged mutually at intervals in an appropriate size. If there are not the intervals and the first capillaries 110 make contact with each other, there is a risk that the light that propagates in the hollow core 1001 leaks via a part where the first capillaries make contact. When the interval is excessively large, a leakage of light from the interval increases excessively.

### [Manufacturing Method]

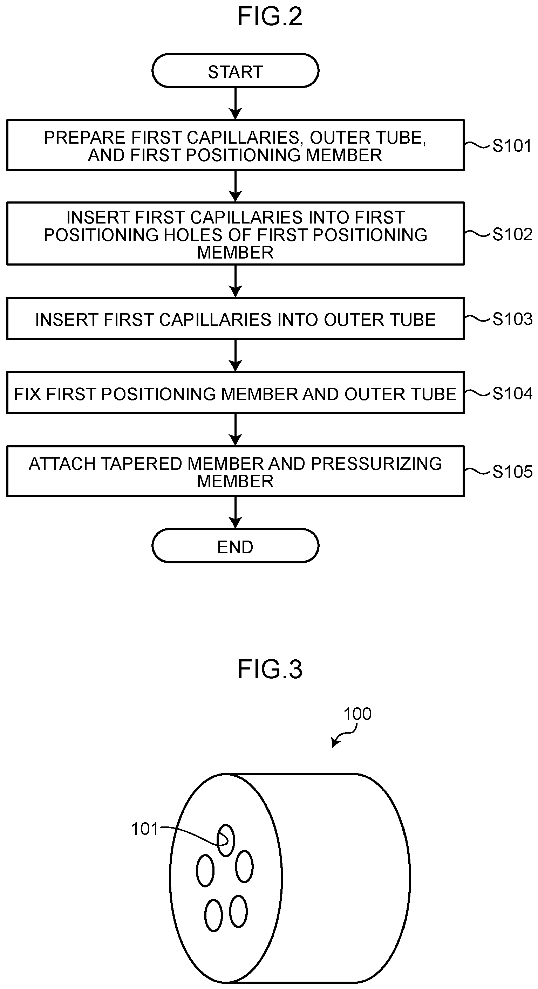

A manufacturing method according to a first embodiment for manufacturing the anti-resonant fiber preform 1000 will be described next. FIG. 2 is a flowchart of the manufacturing method according to the first embodiment. First of all, at step S101, first capillaries, an outer tube, and a first positioning member are prepared. Subsequently, at step S102, the first capillaries are inserted into first positioning holes of the first positioning member. Subsequently, at step S103, the first capillaries are inserted into the outer tube. Subsequently, at step S104, the first positioning member is fixed to the outer tube. Subsequently, at step S105, a tapered member and a pressurizing member are attached. Accordingly, an anti-resonant fiber preform is manufactured.

Each step will be described specifically below with reference to FIGS. 3 to 5.

First of all, at step S101, five the first capillaries 110 like those illustrated in FIG. 1, the outer tube 120, and a first positioning member 100 like that illustrated in FIG. 3 are prepared. The first positioning member 100 is, for example, a cylindrical member made of silica-based glass. The first positioning member 100 is provided with five first positioning holes 101 such that the first positioning holes 101 penetrate the first positioning member 100 in a thickness direction (right-left direction in the drawing). It is preferable that the first positioning holes 101 be parallel to each other. The five first positioning holes 101 are an example of a plurality of first positioning holes.

The five first positioning holes 101 are arranged such that the five first positioning holes 101 correspond to the first positional relationship of the first capillaries 110 in the outer tube 120. In other words, in the embodiment, the five first positioning holes 101 are arranged such that a pentagonal lattice such as a regular pentagonal lattice is formed on a cross-section orthogonal to the thickness direction of the first positioning member 100. In the embodiment, the number of the first positioning holes 101 in the first positioning member 100 and the number of the first capillaries 110 are equal.

Note that it is possible to form the first capillaries 110, the outer tube 120, and the first positioning member 100 by boring holes in a glass rod that is manufactured by a method such as VAD (Vapor Axial Deposition) method or a MCVD (Modified Chemical Vapor Deposition) method. A synthetic silica tube may be used as the first capillary 110 or the outer tube 120. A clearance appropriate with respect to the outer diameter of the first capillaries 110 is set in the first positioning holes 101 such that the first capillaries 110 are insertable.

Subsequently, at step S102, the first capillaries 110 are inserted into the first positioning holes 101 of the first positioning member 100, respectively. Accordingly, the first capillaries 110 are positioned in the first positioning holes 101, respectively. Step S102 is an example of a first step.

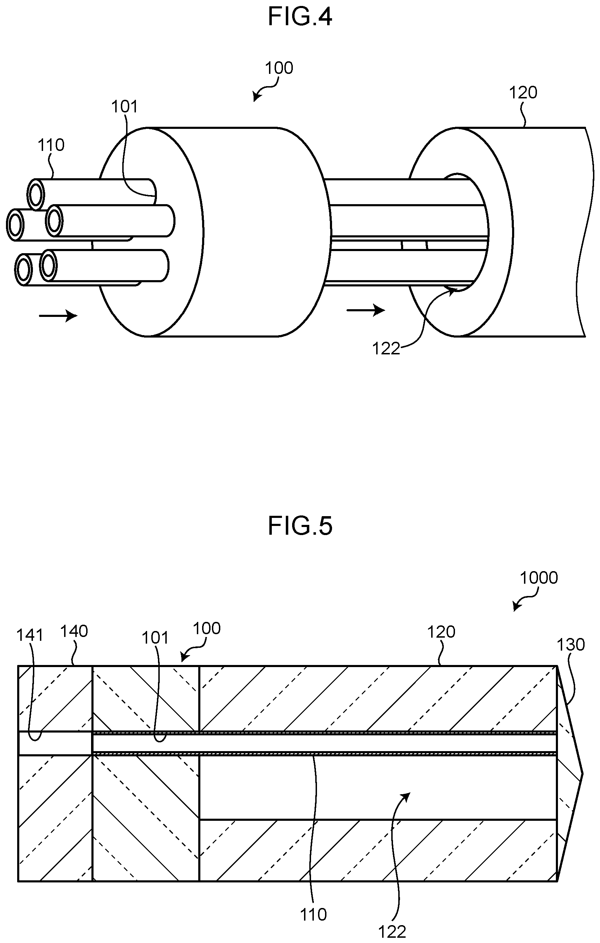

Subsequently, at step S103, the first capillaries 110 that are positioned in the first positioning holes 101 are inserted into a hole 122 of the outer tube 120. FIG. 4 is a diagram illustrating that the first capillaries 110 are being inserted into the outer tube 120. Accordingly, the first capillaries 110 are arranged along the inner wall 121 of the outer tube 120. Step S103 is an example of a second step.

Subsequently, at step S104, the first positioning member 100 is fixed to the outer tube 120. The fixing is enabled, for example, by welding or the like. Step S104 is an example of a third step.

FIG. 5 is a cross-sectional view of the anti-resonant fiber preform 1000 after being completed by executing step S105, taken along a plane containing a center axis of the outer tube 120 extending in a longitudinal direction. At step S105, as illustrated in FIG. 5, a tapered member 130 is attached to a side of a first end (that is a right side in the drawing and that is a side on which the first positioning member 100 is not attached) of the outer tube 120. The tapered member 130 has a form of a cone whose outer diameter decreases with increasing distance from the outer tube 120. At step S105, a pressurizing member 140 is attached on a side of a second end (that is a left side in the drawing and that is a side on which the first positioning member 100 is attached) that is opposite to the first end. Note that, in the embodiment, the pressurizing member 140 is attached with the first positioning member 100 being interposed in between. The pressurizing member 140 is, for example, a member made of a material that is highly heat-resistant such as silica-based glass or metal. The pressurizing member 140 has a through-hole 141. In a state where the pressurizing member 140 is attached to the first positioning member 100, the through-hole 141 communicates with the inside of the first capillary 110. The through-hole 141 also communicates with an external pressurizing device. A pressurized state caused by the pressurizing device reaches the first capillary 110 via the through-hole 141. Step S105 is an example of a ninth step. In this manner, the anti-resonant fiber preform 1000 is manufactured.

According to the manufacturing method according to the first embodiment above, the arrangement of the first positioning holes 101 of the first positioning member 100 correspond to the arrangement of the first capillaries 110 in the outer tube 120. As a result, inserting the first capillaries 110 in the state of being inserted into the first positioning holes 101 and being positioned into the outer tube 120 allows the first capillaries 110 to be easily arranged in the outer tube 120 in a preferable positional relationship (first positional relationship). As a result, according to the manufacturing method according to the first embodiment, it is possible to manufacture the anti-resonant fiber preform 1000 by simple steps.

According to the manufacturing method according to the first embodiment, because the tapered member 130 is provided, it is easy to start drawing an anti-resonant fiber from the anti-resonant fiber preform 1000.

According to the manufacturing method according to the first embodiment, because the pressurizing member 140 for pressurizing the inside of the first capillaries 110 is attached, the inside of the first capillaries 110 is pressurized at the time of drawing, which makes it possible to inhibit or prevent the first capillaries 110 from deforming.

Note that, at steps S102 and S103, all the first capillaries 110 may be inserted into the first positioning holes 101 and then all the first capillaries 110 may be inserted into the outer tube 120 at a time. Alternatively, for example, before the step of inserting the first capillaries 110 into the first positioning holes 101 completes, the step of inserting the first capillaries 110 into the outer tube 120 at a time may be started. Alternatively, for example, for example, three out of the five first capillaries 110 may be inserted into the first positioning holes 101 and the three first capillaries 110 may be inserted into the outer tube 120 at a time and thereafter the remaining two may be inserted into the first positioning holes 101 and may be further inserted into the outer tube 120. Furthermore, for example, step S102 that is an example of the first step and step S103 that is an example of the second step may be executed in a reverse order. In other words, at least one of the first capillaries 110 may be inserted into the hole 122 of the outer tube 120 and then the at least one of the first capillaries 110 may be inserted into at least one of the first positioning holes 101 of the first positioning member 100 and may be positioned.

In the case where the above-described manufacturing method is executed, for example, with the outer tube 120 being arranged horizontally or being arranged obliquely to a vertical direction, there is a possibility that the first capillaries 110 will lean downward under its own weight. Such leaning makes it difficult to execute step S103. For this reason, it is preferable that the first positioning member 100 be thick because the first capillaries 110 tend not to lean downward. Note that, when the first positioning member 100 is too thick, a part used to manufacture an anti-resonant fiber in the first capillaries 110 reduces. Thus, for example, it is preferable that the thickness of the first positioning member 100, that is, the length of the first positioning hole 101 be around 10% to 40% of that of the first capillary 110.

Making the first capillaries 110 and the outer tube 120 stand to be oriented vertically and executing at least steps S102 and S103 are preferable because the problem that the first capillaries 110 lean under its own weight does not occur.

After the first step like step S102, a fourth step of fixing the first positioning member 100 to the first capillaries 110 may be executed. This is preferable because the posture of the first capillaries 110 at the time of insertion of the first capillaries 110 into the outer tube 120 is stable. At the fourth step, for example, the first positioning member 100 and the first capillaries 110 may be fixed by reducing the diameters of the first positioning holes 101. In this case, the first positioning member 100 may be heated to reduce the diameters of the first positioning holes 101.

### (Second Embodiment)

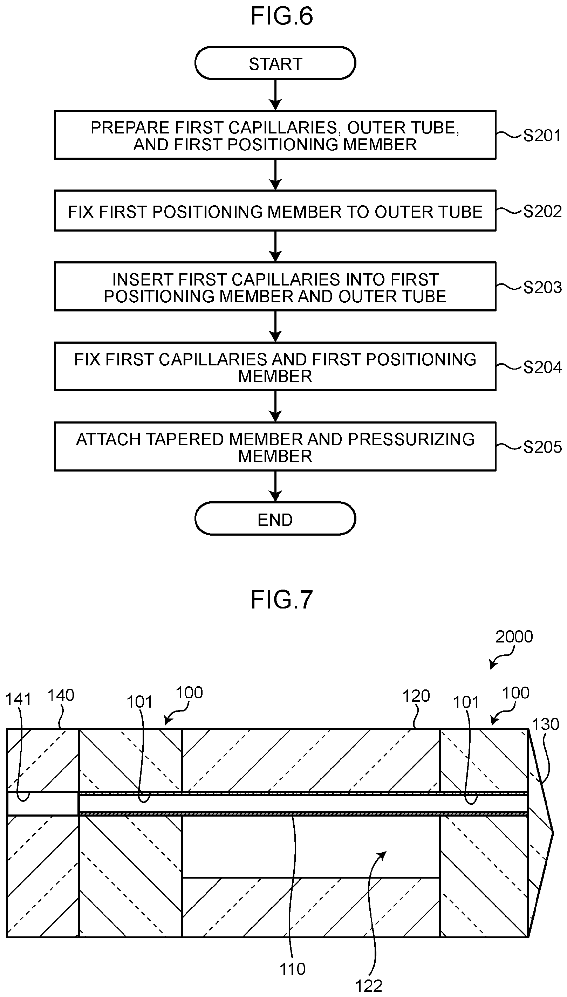

FIG. 6 is a flowchart of a manufacturing method according to a second embodiment for manufacturing the anti-resonant fiber preform 1000. First of all, at step S201, as at step S101, the first capillaries 110, the outer tube 120, and the first positioning member 100 are prepared. Subsequently, at step S202, the first positioning member 100 is fixed to the outer tube 120. Subsequently, at step S203, the first capillaries 110 are inserted into the first positioning holes 101 of the first positioning member 100 and the hole 122 of the outer tube 120. Subsequently, at step S204, the first capillaries 110 is fixed to the first positioning member 100. Subsequently, at step S205, the tapered member 130 and the pressurizing member 140 are attached. Here, step S202 is an example of the third step, step S203 is an example of the first step and the second step, step S204 is an example of the fourth step, and step S205 is an example of a ninth step.

According to the manufacturing method according to the second embodiment above, the same effect as that of the first embodiment is obtained and, for example, it is possible to manufacture the anti-resonant fiber preform 1000 by simple steps.

### (Third Embodiment)

FIG. 7 is an illustration of a manufacturing method according to a third embodiment and is a diagram of an anti-resonant fiber preform 2000 that is manufactured by the manufacturing method according to the third embodiment, taken along a plane containing the center axis of the outer tube 120 extending in the longitudinal direction. As illustrated in FIG. 7, in the manufacturing method according to the third embodiment, two the first positioning members 100 are arranged such that the outer tube 120 is interposed between the first positioning members 100 in the longitudinal direction.

In the case where the anti-resonant fiber preform 2000 is manufactured, for example, the two first positioning members 100 are prepared at step S101 of the first embodiment. Subsequently, at step S102, the first capillaries 110 are inserted into the first positioning holes 101 of one of the first positioning members 100, respectively, and the other first positioning member 100 is arranged on the side of the second end of the outer tube 120. Then, at step S103, the first capillaries 110 that are positioned in the first positioning member 100 arranged on the side of the second end at step S103 are inserted into the hole 122 of the outer tube 120. At the time of insertion, the first positioning member 100 is arranged also on t the side of the first end of the outer tube 120. The first capillaries 110 having penetrated through the hole 122 of the outer tube 120 are inserted into the first positioning holes 101 of the first positioning member 100 on the side of the first end and are positioned in the first positioning holes 101. Thereafter, step S104 is performed and, at step S105, the tapered member 130 is attached to the first positioning member 100 on the side of the first end.

According to the manufacturing method according to the third embodiment, the same effect as that of the first embodiment is obtained and, for example, it is possible to manufacture the anti-resonant fiber preform 3000 by simple steps. Furthermore, supporting the first capillaries 110 at both the ends of the outer tube 120 with the two first positioning members 100 makes it possible to further stabilize the posture of the first capillaries 110 in the hole 122 of the outer tube 120.

When the anti-resonant fiber preform 2000 is manufactured, for example, it is allowable that the two first positioning members 100 are prepared at step S201 of the second embodiment and, at step S202, the first positioning members 100 are fixed to both the ends of the outer tube 120. Subsequently, at step S203, it is allowable that the first capillaries 110 are inserted into the first positioning holes 101 of the first positioning member 100 on the side of the second end, subsequently inserted into the hole 122 of the outer tube 120, and subsequently inserted into the first positioning holes 101 of the first positioning member 100 on the side of the first end. Also in this case, supporting the first capillaries 110 at both the ends of the outer tube 120 with the two first positioning members 100 makes it possible to further stabilize the posture of the first capillaries 110 in the hole 122 of the outer tube 120.

### (Fourth Embodiment)

In the anti-resonant fiber preform that is manufactured according to the above-described embodiment, the first positioning member 100 and the pressurizing member 140 are configured such that the inside of the first capillaries 110 is pressurized. On the other hand, an anti-resonant fiber preform that is manufactured according to a fourth embodiment is configured such that, furthermore, an area surrounded by the first capillaries 110 in the hole 122 of the outer tube 120 also can be pressurized.

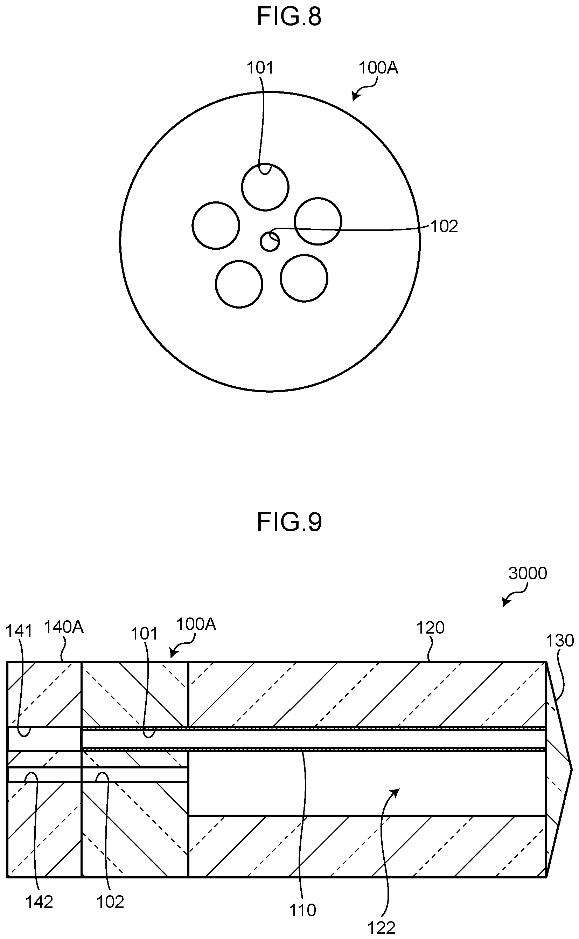

FIG. 8 is an illustration of a manufacturing method according to a fourth embodiment and is a schematic configuration diagram of a first positioning member 100A that is used for manufacturing. The first positioning member 100A has a configuration obtained by further providing the first positioning member 100 illustrated in FIG. 3 with a first through-hole 102. The first through-hole 102 is, for example, a through-hole that is provided in parallel with the first positioning holes 101 in an area surrounded by the five first positioning holes 101.

As for the manufacturing method according to the fourth embodiment, for example, in the manufacturing method according to the first embodiment described with reference to FIG. 2, the first positioning member 100A is used instead of the first positioning member 100 and another pressurizing member is used instead of the pressurizing member 140.

FIG. 9 is an illustration of the manufacturing method according to the fourth embodiment and is a diagram of an anti-resonant fiber preform 3000 after being completed by executing step S105, taken along a plane containing the center axis of the outer tube 120 extending in the longitudinal direction. As illustrated in FIG. 9, with the first positioning member 100A being attached to the outer tube 120, the first through-holes 102 communicate with the area surrounded by the first capillaries 110 in the hole 122 of the outer tube 120. A pressurizing member 140A that replaces the pressurizing member 140 has a through-hole 142. In a state of being attached to the first positioning member, the through-hole 142 communicates with the inside of the first capillary 110 via the first through-hole 102. The through-hole 142 is connected to an external pressurizing device. In other words, with the first positioning member 100A being attached to the outer tube 120, the first through-hole 102 is connected to the external pressurizing device via the through-hole 142.

According to the manufacturing method according to the fourth embodiment, the same effect as that of the first embodiment is obtained and, for example, it is possible to manufacture the anti-resonant fiber preform 3000 by simple steps. Furthermore, according to the manufacturing method according to the fourth embodiment, the inside of the first capillaries 110 and the area surrounded by the first capillaries 110 in the hole 122 of the outer tube 120 are pressurized independently at the time of drawing, which makes it possible to strictly control the structure of the first capillaries 110 and the area.

### (Fifth Embodiment)

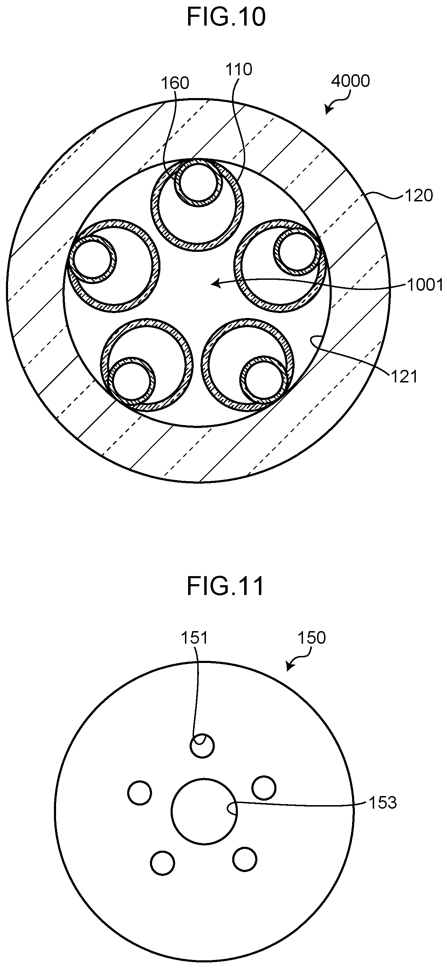

FIG. 10 is a schematic cross-sectional view of a cross-section of an anti-resonant fiber preform that is manufactured by a manufacturing method according to a fifth embodiment, which is a cross-section orthogonal to a longitudinal direction. An anti-resonant fiber preform 4000 has a configuration obtained by adding five second capillaries 160 to the anti-resonant fiber preform 1000 illustrated in FIG. 1. Each of the five second capillaries 160 has an outer diameter smaller than an inner diameter of the first capillary 110 and the five second capillaries 160 are arranged inside the respective first capillaries 110. In other words, the five second capillaries 160 are arranged such that a pentagonal lattice such as a regular pentagonal lattice is formed on the cross-section. A state that the second capillaries 160 are arranged such that the second capillaries 160 form the pentagonal lattice is an example of a state that the second capillaries 160 are arranged mutually in a second positional relationship. Note that a thickness of the second capillaries 160 is also set according to a wavelength of light that is propagated by the hollow core 1001 such that anti-resonant light confinement is enabled.

In the anti-resonant fiber that is manufactured using the anti-resonant fiber preform 4000 above, the structure that is formed of the first capillaries 110 and the second capillaries 160 enables an anti-resonant double light confinement structure with respect to the hollow core of the anti-resonant fiber. As a result, such an anti-resonant fiber sometimes can reduce a confinement loss of the hollow core more than the anti-resonant fiber in which the anti-resonant fiber preform that is manufactured by, for example, the manufacturing method according to the first embodiment is used.

Next, a manufacturing method according to a fifth embodiment will be described specifically with reference to FIG. 2 and FIGS. 11 to 14. In the manufacturing method according to the fifth embodiment, first of all, for example, at step S101 of the manufacturing method according to the first embodiment in FIG. 2, the five second capillaries 160 and a second positioning member 150 illustrated in FIG. 11 are prepared together with the first capillaries 110, the outer tube 120, and the first positioning member 100.

The second positioning member 150 is, for example, a cylindrical member made of silica-based glass. The second positioning member 150 is provided with five second positioning holes 151 such that the five second positioning holes 151 penetrate in a thickness direction. It is preferable that the second positioning holes 151 be parallel with one another. The five second positioning holes 151 are an example of a plurality of second positioning holes.

The five second positioning holes 151 are arranged such that the five second positioning holes 151 correspond to the second positional relationship of the second capillaries 160 in the outer tube 120. In other words, in the fifth embodiment, the five second positioning holes 151 are arranged such that a pentagonal lattice such as a regular pentagonal lattice is formed on a cross-section orthogonal to the thickness direction. In the embodiment, the number of the second positioning holes 151 in the second positioning member 150 and the number of the second capillaries 160 are equal.

The second positioning member 150 is provided with a second through-hole 153. The second through-hole 153 is, for example, a through-hole that is provided in parallel with the second positioning holes 151 in an area surrounded by the five second positioning holes 151.

It is possible to manufacture the second capillaries 160 by the same method as for the first capillaries 110 and manufacture the second positioning member 150 by the same method as for the first positioning member 100.

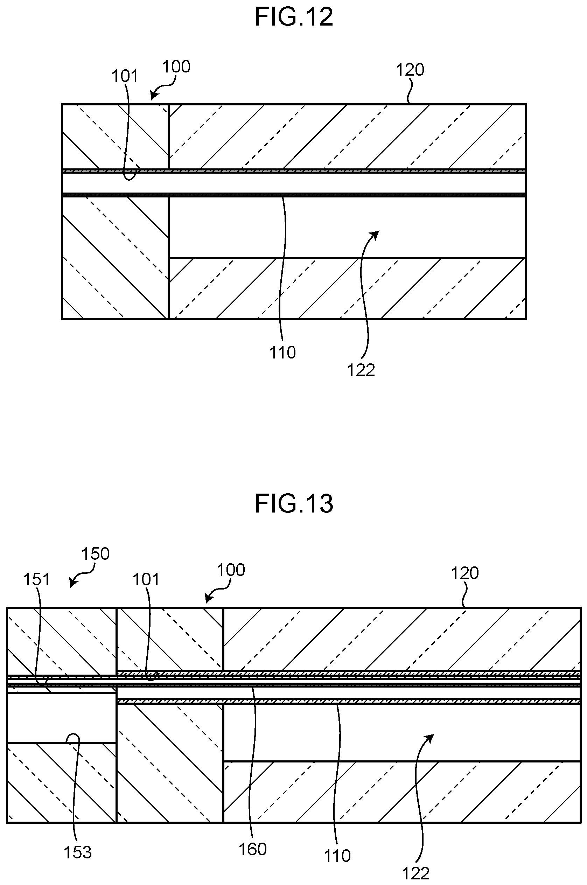

Subsequently, in the manufacturing method according to the fifth embodiment, steps S102 to S104 illustrated in FIG. 2 are executed and a structure like that illustrated in FIG. 12 is made. In this case, for example, the first positioning member 100 and the first capillaries 110 may be fixed by reducing the diameters of the first positioning holes 101.

Subsequently, the second positioning member 150 is arranged such that the first positioning member 100 is interposed between the outer tube 120 and the second positioning member 150 and the second positioning member 150 is fixed to the first positioning member 100. Accordingly, the first positioning member 100, the second positioning member 150, and the outer tube 120 are fixed (an example of a seventh step). In this case, when viewed in the longitudinal direction of the outer tube 120, a positional relationship between positions of the second positioning holes 151 of the second positioning member 150 and the first positioning holes 101 of the first positioning member 100 is the same as a positional relationship between the second capillaries 160 and the first capillaries 110 like that illustrated in FIG. 10.

Subsequently, the second capillaries 160 are inserted into the second positioning holes 151, respectively. Accordingly, the second capillaries 160 are positioned in the second positioning holes 151, respectively (an example of a fifth step).

Subsequently, the second capillaries 160 that are positioned are inserted into the first capillaries 110, respectively (an example of a sixth step). At that time, the second capillaries 160 are also inserted into the hole 122 of the outer tube 120. FIG. 13 is diagram illustrating a state after insertion of the second capillaries 160 into the first capillaries 110. Note that the example of the fifth step and the example of the sixth step may be executed in a reverse order.

As illustrated in FIG. 13, with the second positioning member 150 being attached to the first positioning member 100, the second through-hole 153 communicates with the inside of the first capillary 110.

Thereafter, for example, the second positioning member 150 and the second capillaries 160 may be fixed by reducing the diameters of the second positioning holes 151 (an example of an eighth step).

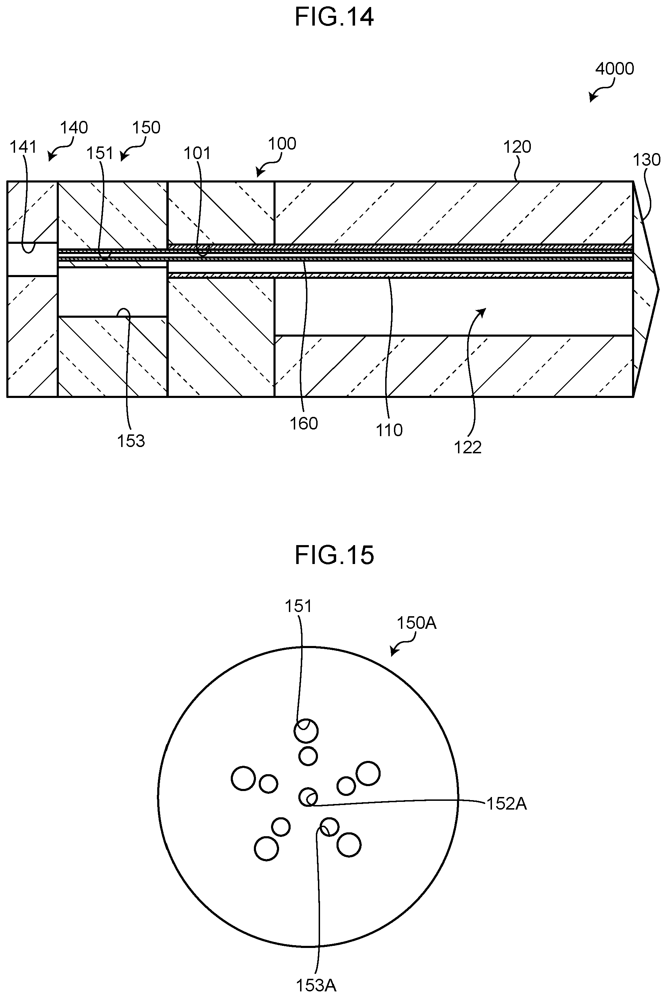

Subsequently, step S105 illustrated in FIG. 2 is executed and the anti-resonant fiber preform 4000 like that illustrated in FIG. 14 is completed. Note that, as illustrated in FIG. 14, the second through-hole 153 of the second positioning member 150 also communicates with the through-hole 141 of the pressurizing member 140. Thus, the second through-hole 153 communicates with the inside of the first capillary 110 and is connected to an external pressurizing device via the through-hole 141. The external pressurizing device may be configured to pressurize the inside of the first capillary 110 and the inside of the second capillary 160 simultaneously at the same pressure or may be configured to pressurize the inside of the first capillary 110 and the inside of the second capillary 160 independently at different pressures.

According to the manufacturing method according to the fifth embodiment, the same effect as that of the first embodiment is obtained. Furthermore, because the arrangement of the second positioning holes 151 of the second positioning member 150 correspond to the arrangement of the second capillaries 160 in the outer tube 120, inserting the second capillaries 160 in the state of being inserted into the second positioning holes 151 and being positioned into the outer tube 120 allows the second capillaries 160 to be easily arranged in the outer tube 120 in a preferable positional relationship (second positional relationship). As a result, according to the manufacturing method according to the fifth embodiment, it is possible to manufacture the anti-resonant fiber preform 4000 by simple steps.

According to the manufacturing method according to the fifth embodiment, via the pressurizing member 140, the inside of the first capillary 110 and the inside of the second capillary 160 are pressurized with the same pressurizing device or different pressurizing devices at the time of drawing, which makes it possible to inhibit or prevent the first capillaries 110 and the second capillaries 160 from deforming.

Note that the anti-resonant fiber preform 4000 may be manufactured according to a manufacturing flow like that in FIG. 6 as a first modification of the manufacturing method according to the fifth embodiment. In this case, for example, at step S201 in FIG. 6, the five second capillaries 160 and the second positioning member 150 illustrated in FIG. 11 are prepared together with the first capillaries 110, the outer tube 120, and the first positioning member 100.

Subsequently, after steps S202 to S204 illustrated in FIG. 6 are executed, the second positioning member 150 is arranged such that the first positioning member 100 is interposed between the outer tube 120 and the second positioning member 150 and the second positioning member 150 is fixed to the first positioning member 100.

Subsequently, the second capillaries 160 are inserted into the second positioning holes 151, respectively. At that time, the second capillary 160 that is inserted into a certain one of the second positioning holes 151 is subsequently inserted into any one of the first capillaries 110.

Subsequently, step S205 is executed, so that the anti-resonant fiber preform 4000 is completed.

Note that two the first positioning members 100 and two the second positioning members 150 may be used as in the manufacturing method according to the third embodiment as a second modification of the manufacturing method according to the fifth embodiment. In the case of the second modification, for example, the first positioning members 100 are arranged on the side of the first end and the side of the second end of the outer tube 120, respectively. At that time, the first positioning members 100 may be fixed to the outer tube 120.

Subsequently, insertion of the first capillaries 110 is performed such that the first capillaries 110 pass through the first positioning holes 101 of one of the first positioning members 100, the outer tube 120, and the first positioning holes 101 of the other first positioning member 100 in this order. Thereafter, it is preferable that the first capillaries 110 be fixed to the two first positioning members 100.

Subsequently, the two second positioning members 150 are fixed to the first positioning members 100, respectively, on both the side of the first end and the side of the second end of the outer tube 120 such that the first positioning member 100 is interposed between the second positioning member 150 and the outer tube 120.

Subsequently, insertion of the second capillaries 160 is performed such that the second capillaries 160 pass through the second positioning holes 151 of one of the second positioning members 150, the first positioning holes 101 of one of the first positioning members 100, the outer tube 120, the first positioning holes 101 of the other first positioning member 100, and the second positioning holes 151 of the other second positioning member 150 in this order. Thereafter, it is preferable that the second capillaries 160 be fixed to the two second positioning members 150.

Subsequently, for example, step S205 in FIG. 6 is executed, so that the anti-resonant fiber preform 4000 is completed.

### (Sixth Embodiment)

In the anti-resonant fiber preform 4000 that is manufactured according to the fifth embodiment and the modifications described above, the first positioning member 100, the second positioning member 150, and the pressurizing member 140 are configured such that the inside of the first capillaries 110 and the inside of the second capillaries 160 are pressurized. On the other hand, an anti-resonant fiber preform that is manufactured according to a sixth embodiment is configured such that, furthermore, an area surrounded by the first capillaries 110 in the hole 122 of the outer tube 120 also can be pressurized.

FIG. 15 is an illustration of a manufacturing method according to a sixth embodiment and is a schematic configuration diagram of a second positioning member 150A that is used for manufacturing. The second positioning member 150A has a configuration obtained by replacing the second through-hole 153 with second through-holes 153A and further providing a third through-hole 152A in the configuration of the second positioning member 150 illustrated in FIG. 11. The second through-holes 153A are through-holes that are provided in parallel with the second positioning holes 151 in the vicinity of the respective five second positioning holes 151. The third through-hole 152A is a through-hole that is provided in parallel with the first positioning holes 101 in an area surrounded by the five second through-holes 153A.

As for the manufacturing method according to the sixth embodiment, in the manufacturing method according to the fifth embodiment or the modifications thereof, the first positioning member 100A (refer to FIGS. 8 and 9) is used instead of the first positioning member 100, the second positioning member 150A is used instead of the second positioning member 150, and the pressurizing member 140A is used instead of the pressurizing member 140.

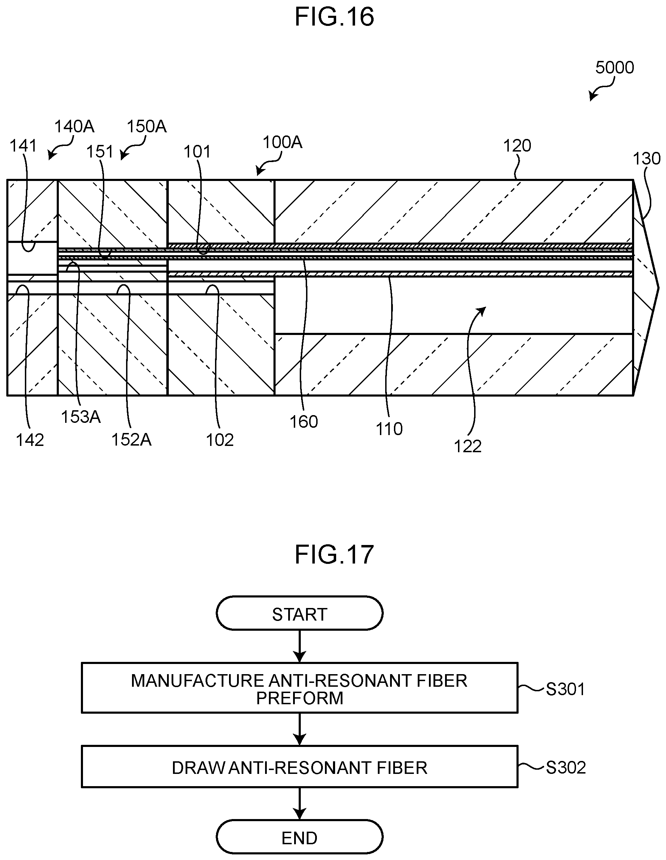

FIG. 16 is an illustration of the manufacturing method according to the sixth embodiment and is a diagram of an anti-resonant fiber preform 5000 after being completed, taken along a plane containing the center axis of the outer tube 120 extending in the longitudinal direction. As illustrated in FIG. 16, with the second positioning member 150A being attached to the first positioning member 100A, the second through-holes 153A communicate with the inside of the first capillaries 110 and are connected to an external pressurizing device via the through-hole 141 of the pressurizing member 140A. With the second positioning member 150A being attached to the first positioning member 100A, the third through-hole 152A communicates with an area surrounded by the first capillaries 110 in the hole 122 of the outer tube 120 via the first through-hole 102 of the first positioning member 100A and is connected to the external pressurizing device via the through-hole 142 of the pressurizing member 140A.

According to the manufacturing method according to the sixth embodiment, the same effect as that of the first embodiment is obtained and, for example, it is possible to manufacture the anti-resonant fiber preform 5000 by simple steps. Furthermore, according to the manufacturing method according to the sixth embodiment, the inside of the first capillaries 110, the inside of the second capillaries 160, and the area surrounded by the first capillaries 110 in the hole 122 of the outer tube 120 are pressurized at the time of drawing, which makes it possible to further inhibit or prevent the first capillaries 110, the second capillaries 160, and the area from deforming.

### (Seventh Embodiment)

FIG. 17 is a flowchart of a method of manufacturing an anti-resonant fiber according to a seventh embodiment. In the seventh embodiment, at step S301, an anti-resonant fiber preform is manufactured by executing the method of manufacturing an anti-resonant fiber preform according to any one of the above-described embodiments as an anti-resonant fiber preform manufacturing step. Subsequently, at step S302, a drawing step of drawing the manufactured anti-resonant fiber preform is executed. It is possible to execute the drawing step with a known drawing device.

According to the seventh embodiment above, it is possible to manufacture an anti-resonant fiber easily using the anti-resonant fiber preform that is manufactured by the simple steps.

### (Example)

An anti-resonant fiber preform was manufactured based on the fifth embodiment as an example. A commercially available synthetic silica tube was prepared as the outer tube. The synthetic silica tube had an outer diameter of 45 mm, an inner diameter of 33 mm, and a length of 1,000 mm.

The commercially available synthetic silica tube is extended and the first capillaries and the second capillaries were prepared. The first capillary had an outer diameter of 11 mm, an inner diameter of 10 mm, and a length of 1,600 mm. The second capillary had an outer diameter of 5 mm, an inner diameter of 4 mm, and a length of 2,200 mm.

A cylindrical silica glass having a diameter of 45 mm and a length of 300 mm was prepared, the first positioning holes were bored in the silica glass, and two first positioning members were made. Note that the first positioning hole had an inner diameter in a size larger than that of the outer diameter of the first capillary by only 0.5 mm. A cylindrical silica glass having a diameter of 45 mm and a length of 300 mm was prepared, the second positioning holes and the second through-hole were bored in the silica glass, and two second positioning members were made. Note that the second positioning hole had an inner diameter in a size larger than that of the outer diameter of the second capillary by only 0.5 mm. The second through-hole had an inner diameter of 17 mm.

Subsequently, the first positioning members were welded to both ends of the outer tube, respectively, using an oxyhydrogen flame. Subsequently, five first capillaries were inserted sequentially such that the first capillaries pass through one of the first positioning members, the outer tube, and the other first positioning member in this order. After insertion of the five first capillaries ended, the second positioning members were welded to the respective first positioning members using an oxyhydrogen flame. At the time of the welding, the first positioning members were also heated and the diameters of the first positioning holes were reduced. Accordingly, the first capillaries were fixed to the first positioning members and were in stable positions.

Subsequently, five first capillaries were inserted sequentially such that the second capillaries pass through one of the second positioning members, the one of the first positioning members, the first capillaries, the other first positioning member, and the other second positioning member in this order. Thereafter, a pressurizing member was welded to the one of the second positioning members using an oxyhydrogen flame. A tapered member is welded to the other second positioning member using an oxyhydrogen flame. At the time of the welding, the second positioning members were also heated and the diameters of the second positioning holes were reduced. Accordingly, the second capillaries were fixed to the second positioning members and were in stable positions. Thereafter, the tapered member and the pressurizing member were attached.

As described above, it was confirmed that it is possible to manufacture an anti-resonant fiber preform without cumbersome steps.

In each of the above-described embodiments, the tapered member 130 is attached and, for example, a tapered part may be provided by processing the first capillaries 110, the outer tube 120 and furthermore other members by heating and welding by a flame, or the like, into a tapered form.

For example, in the fifth embodiment, the anti-resonant fiber preform in which the capillaries are in the double structure is manufactured, and an anti-resonant fiber preform in which capillaries are in a triple structure or a quadruple structure may be manufactured by further using a third positioning member and a fourth positioning member.

The above-described embodiments do not limit the present invention. Ones configured by appropriately combining the above-described components are also covered by the present invention. Further effects and modification can be led easily by those skilled in the art. Thus, modes of the present invention in a wider range are not limited to the above-described embodiments and various changes can be made.

### Industrial Applicability

The present invention is usable to manufacture an anti-resonant fiber.

### Reference Signs List

100, 100A FIRST POSITIONING MEMBER
101 FIRST POSITIONING HOLE
102 FIRST THROUGH-HOLE
110 FIRST CAPILLARY
120 OUTER TUBE
121 INNER WALL
122 HOLE
130 TAPERED MEMBER
140, 140A PRESSURIZING MEMBER
141, 142 THROUGH-HOLE
150, 150A SECOND POSITIONING MEMBER
151 SECOND POSITIONING HOLE
152A THIRD THROUGH-HOLE
153, 153A SECOND THROUGH-HOLE
160 SECOND CAPILLARY
1000, 2000, 3000, 4000, 5000 ANTI-RESONANT FIBER PREFORM
1001 HOLLOW CORE

## Claims

1. A method of manufacturing an anti-resonant fiber preform that includes an outer tube and a plurality of first capillaries that are joined to an inner wall of the outer tube and that are arranged mutually in a first positional relationship, a hollow core being formed in an area surrounded by the first capillaries, the method comprising:
a first step of positioning the first capillaries respectively in a plurality of first positioning holes which are provided in a first positioning member; and
a second step of inserting the first capillaries into the outer pipe,
wherein the first positioning holes which are provided in the first positioning member are arranged such that the first positioning holes correspond to the first positional relationship of the first capillaries in the outer tube.

2. The method of manufacturing an anti-resonant fiber preform according to claim 1, wherein, in the first step, the first capillaries are inserted into the first positioning holes, respectively.

3. The method of manufacturing an anti-resonant fiber preform according to claim 1, wherein the outer tube, the first capillaries, and the first positioning member are made of glass.

4. The method of manufacturing an anti-resonant fiber preform according to claim 1, wherein a number of the first positioning holes in the first positioning member and a number of the first capillaries are equal.

5. The method of manufacturing an anti-resonant fiber preform according to claim 1, comprising a third step of fixing the first positioning member to the outer tube.

6. The method of manufacturing an anti-resonant fiber preform according to claim 1, wherein two the first positioning members are arranged such that the outer tube is interposed between the first positioning members in a longitudinal direction.

7. The method of manufacturing an anti-resonant fiber preform according to claim 1, comprising a fourth step of fixing the first positioning member to the first capillaries after the first step.

8. The method of manufacturing an anti-resonant fiber preform according to claim 7, wherein the fourth step includes fixing the first positioning member and the first capillaries by reducing diameters of the first positioning holes.

9. The method of manufacturing an anti-resonant fiber preform according to claim 1, wherein the first positioning member includes a first through-hole that, with the first positioning member being attached to the outer tube, communicates with the area surrounded by the first capillaries.

10. The method of manufacturing an anti-resonant fiber preform according to claim 1, wherein the anti-resonant fiber preform includes a plurality of second capillaries that have an outer diameter smaller than an inner diameter of the first capillary and that are arranged inside the first capillaries, respectively, and
the method comprising a fifth step of respectively positioning the second capillaries in a plurality of second positioning holes that are provided in the second positioning member; and
a sixth step of inserting the second capillaries into the first capillaries, respectively,
wherein the second positioning holes that are provided in the second positioning member are arranged such that the second positioning holes correspond to a second positional relationship of the second capillaries in the outer tube.

11. The method of manufacturing an anti-resonant fiber preform according to claim 10, wherein the second positioning member has a second through-hole that communicates with inside of the first capillary with the second positioning member being attached to the first positioning member.

12. The method of manufacturing an anti-resonant fiber preform according to claim 10, wherein the second positioning member is arranged such that the first positioning member is interposed between the outer pipe and the second positioning member.

13. The method of manufacturing an anti-resonant fiber preform according to claim 10, comprising a seventh step of fixing the first positioning member, the second positioning member, and the outer tube.

14. The method of manufacturing an anti-resonant fiber preform according to claim 10, comprising an eighth step of fixing the second positioning member to the second capillaries.

15. The method of manufacturing an anti-resonant fiber preform according to claim 14, wherein the eighth step includes fixing the second positioning member and the second capillaries by reducing diameters of the second positioning holes.

16. The method of manufacturing an anti-resonant fiber preform according to claim 10, wherein the first positioning member has a first through-hole that communicates with an area surrounded by the first capillaries with the first positioning member being attached to the outer tube, and
the second positioning member has a third through-hole that communicates with the area surrounded by the first capillaries via the first through-hole with the second positioning member being attached to the first positioning member.

17. The method of manufacturing an anti-resonant fiber preform according to any one of claims 1 to 16, comprising a ninth step of providing a tapered part whose outer diameter decreases with increasing distance from the outer tube on a side of a first end of the outer tube, and attaching a pressurizing member for pressurizing at least the inside of the first capillary on a side of a second end that is opposite to the first end of the outer tube.

18. A method of manufacturing an anti-resonant fiber comprising:
an anti-resonant fiber preform manufacturing step of performing the method of manufacturing an anti-resonant fiber preform according to any one of claims 1 to 16; and
a drawing step of drawing an anti-resonant fiber from the manufactured anti-resonant fiber preform.
